# EUROPEAN PATENT APPLICATION

(11) **EP 2 559 629 A1**
(43) Date of publication of application: **20.02.2013**
(21) Application number: 12180115.3
(22) Date of filing: 10.08.2012
(51) Int. Cl.: B65D 25/28, B65D 81/38, B65D 43/02

(54) **Cup sleeve**

(30) Priority: 18.08.2011 TW 100129578
(71) Applicant: Yang, Ting-Yu, Taipei City 11490 (TW)
(72) Inventor: Yang, Ting-Yu, Taipei City 11490 (TW)
(74) Representative: Regimbeau

(57) **Abstract**

A cup sleeve is adapted to be sleeved around a cup (100) and includes a sleeve body (2) that is a multilayered tissue paper. The sleeve body (2) is formed with upper and lower open ends (21) and (22) opposite to each other, and has an outer surface that includes at least one non-rough region (23) and at least one rough region (24) .

## Description

This invention relates to a sleeve, more particularly to a cup sleeve for providing thermal insulation between a cup and a user's hand.

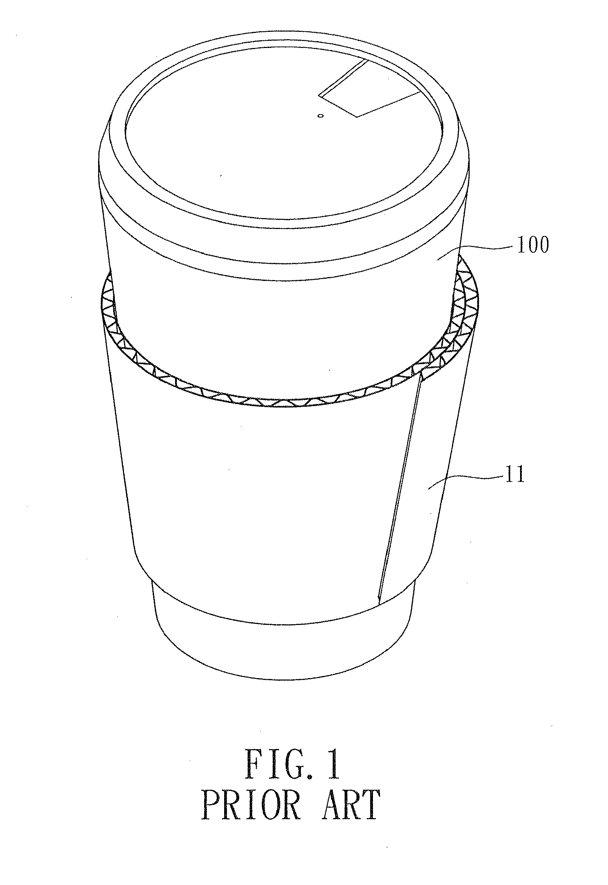

Referring Fig. 1, a conventional cup sleeve 11 is formed by bending corrugated paper, and adhering two opposite ends of the corrugated paper using an adhesive. The cup sleeve 11 serves as a heat insulator disposed around the circumference of a cup 100, and facilitates holding of the cup 100.

However, the corrugated paper has a relatively large thickness and high cost. Recycling of the cup sleeve 11 is inconvenient since it is necessary to remove the adhesive from the cup sleeve 11. Moreover, the cup sleeve 11 is unable to perfectly fit the circumference of the cup 100 because the cup sleeve 11 has double thickness at the position where the two opposite ends of the corrugated paper overlap and are attached to each other. Thus, such cup sleeve 11 is less likely to be used with a cup having a constant diameter.

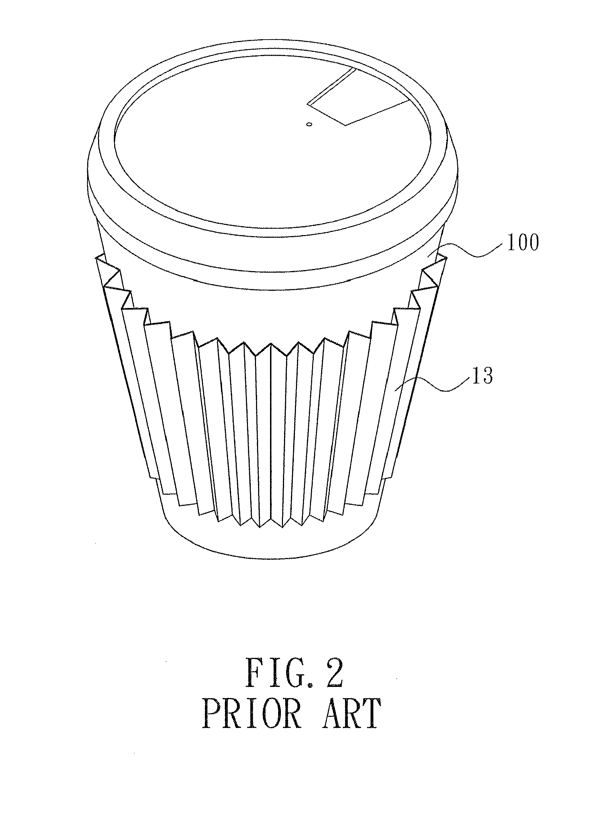

In Taiwanese Utility Model No. M320352, a cup sleeve 13 has been proposed (see Fig. 2). The cup sleeve 13 is made of an elastic material, and formed with a wavy surrounding surface to provide thermal insulation of the cup 100. Although an advertisement may be printed on the cup sleeve 13 to attract the user's attention, the advertisement printed on the wavy surrounding surface is not appealing.

Therefore, an object of the present invention is to provide a cup sleeve that can overcome the aforesaid drawbacks of the prior art.

Accordingly, a cup sleeve of this invention is adapted to be sleeved around a cup and comprises a sleeve body that is a multilayered tissue paper. The sleeve body is formed with upper and lower open ends opposite to each other, and has an outer surface that includes at least one non-rough region and at least one rough region.

Other features and advantages of the present invention will become apparent in the following detailed description of the preferred embodiments of the invention, with reference to the accompanying drawings, in which:
Fig. 1 is a perspective view of a conventional cup sleeve made of a corrugated paper;
Fig. 2 is a perspective view of a cup sleeve disclosed in Taiwanese Utility Model No. M320352;
Fig. 3 is a perspective view of the first preferred embodiment of a cup sleeve according to this invention;
Fig. 4 is a schematic top view illustrating an embossing process for forming a rough region on the cup sleeve shown in Fig. 3;
Fig. 5 is a perspective view of the second preferred embodiment of a cup sleeve according to this invention;
Fig. 6 is a cross-sectional view of the cup sleeve shown in Fig. 5;
Fig. 7 is a side view illustrating the cup sleeve shown in Fig. 5 in a state of use;
Fig. 8 is a side view of the third preferred embodiment of a cup sleeve according to this invention;
Fig. 9 is a side view of the fourth preferred embodiment of a cup sleeve according to this invention;
Fig. 10 is a side view illustrating a cup being extended into the cup sleeve shown in Fig. 9;
Fig. 11 is a side view illustrating the cup sleeve of Fig. 9 in a state of use;
Fig. 12 is a side view of the fifth preferred embodiment of a cup sleeve according to this invention;
Fig. 13 is a plan view of the sixth preferred embodiment of a cup sleeve according to this invention; and
Fig. 14 is a side view illustrating the cup sleeve of Fig. 13 in a state of use.

Before the present invention is described in greater detail, it should be noted herein that like elements are denoted by the same reference numerals throughout the disclosure.

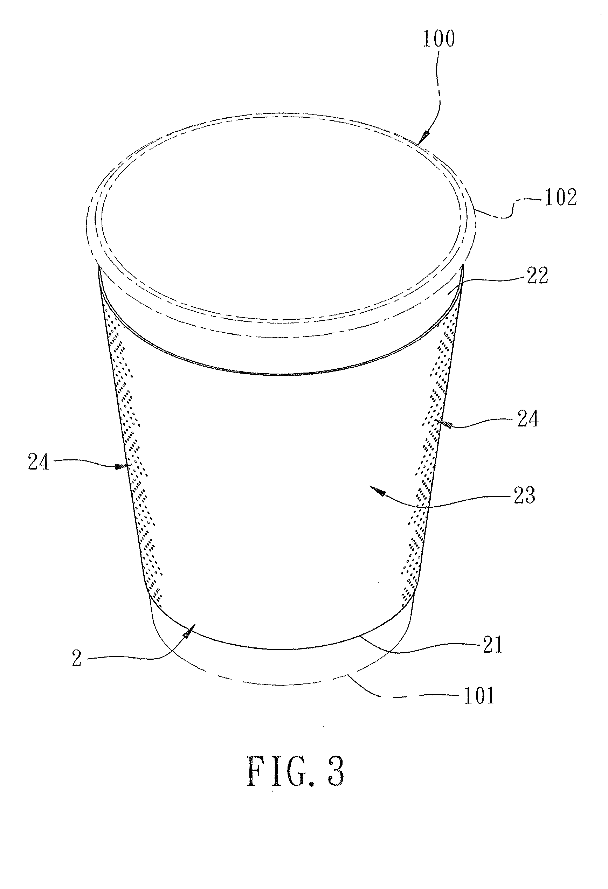

Referring to Fig. 3, the first preferred embodiment of a cup sleeve according to this invention is shown, and the cup sleeve is adapted to be sleeved around a cup 100, which has a lower closed end 101 and an upper open end 102, and which tapers from the upper open end 102 to the lower closed end 101. In this embodiment, the cup sleeve comprises a sleeve body 2 formed with lower and upper open ends 21 and 22 that are opposite to each other.

In the sleeve body 2, the lower open end 21 has a perimeter smaller than that of the upper open end 22. The perimeter of the lower open end 21 is close to that of the lower closed end 101 of the cup 100. Similarly, the perimeter of the upper open end 22 is close to that of the upper open end 102 of the cup 100.

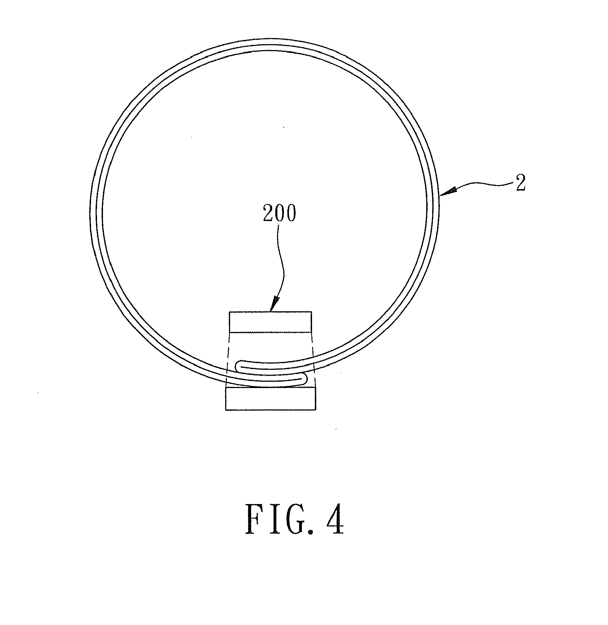

As shown in Fig. 4, the cup sleeve is formed by folding a tissue paper to obtain a multilayered tissue paper, overlapping two opposite ends of the multilayered tissue paper, and embossing the overlap portion using an embossing device 200 (such as a steel seal device) formed with a predetermined pattern. After the embossing process, the cup sleeve is formed with an embossed pattern at the overlap portion, thereby forming a rough region 24 (see also Fig. 3). The overlap portion, which has been subjected to the embossing process, has a thickness substantially the same as that of the non-overlap portion of the cup sleeve. The cup sleeve may be formed with a plurality of rough regions 24 by virtue of the embossing process. Preferably, the sleeve body 2 has a plurality of non-rough regions 23, and a plurality of rough regions 24 that have a number identical to a number of the non-rough regions 23, and that are disposed alternately with the non-rough regions 24.

In this embodiment, the multilayered tissue paper is obtained by folding the tissue paper twice, such that the cup sleeve is a four-layer tissue paper to provide thermal insulation. The cup sleeve has two non-rough regions 23 and two rough regions 24 on an outer surface thereof, and the non-rough regions 23 and the rough regions 24 are disposed alternately with each other.

The embossed pattern may be a trademark or other patterns for attracting the user's attention. Because the cup sleeve of this invention is made without using an adhesive, it is environmental friendly and can be produced at a relatively low cost. The rough regions 24 also facilitate holding of the cup 100. Besides, since the cup sleeve is a multilayered tissue paper, the cup sleeve can be removed from the cup 100 to serve as a tissue napkin.

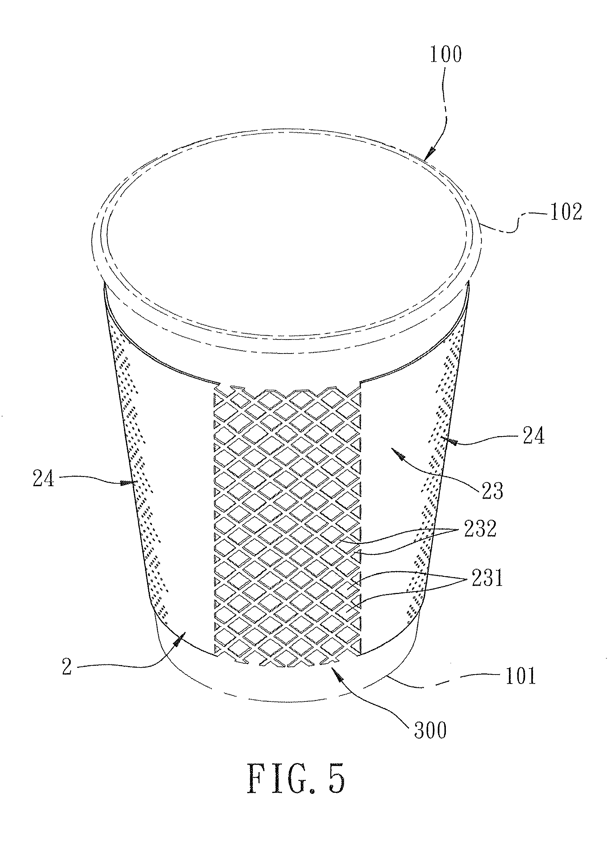

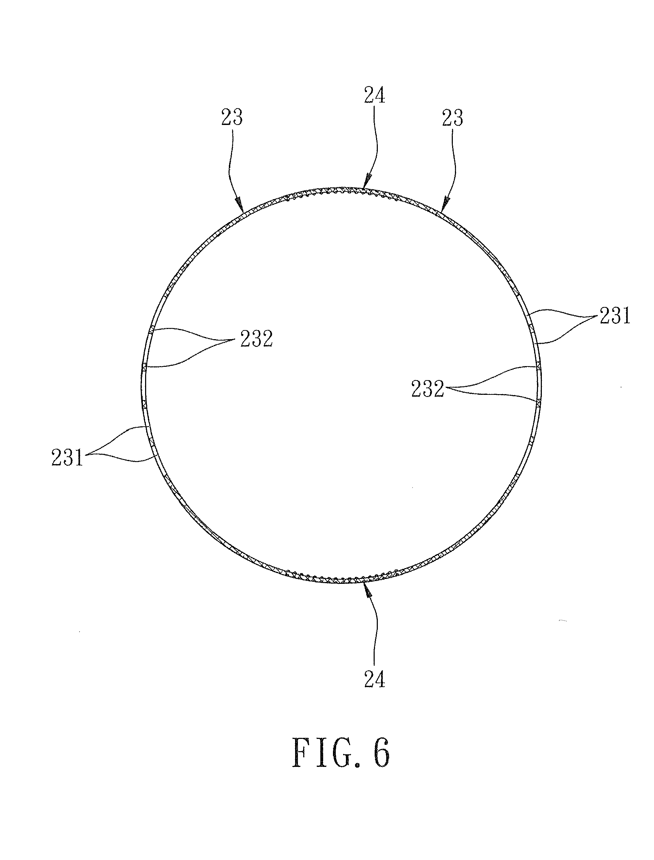

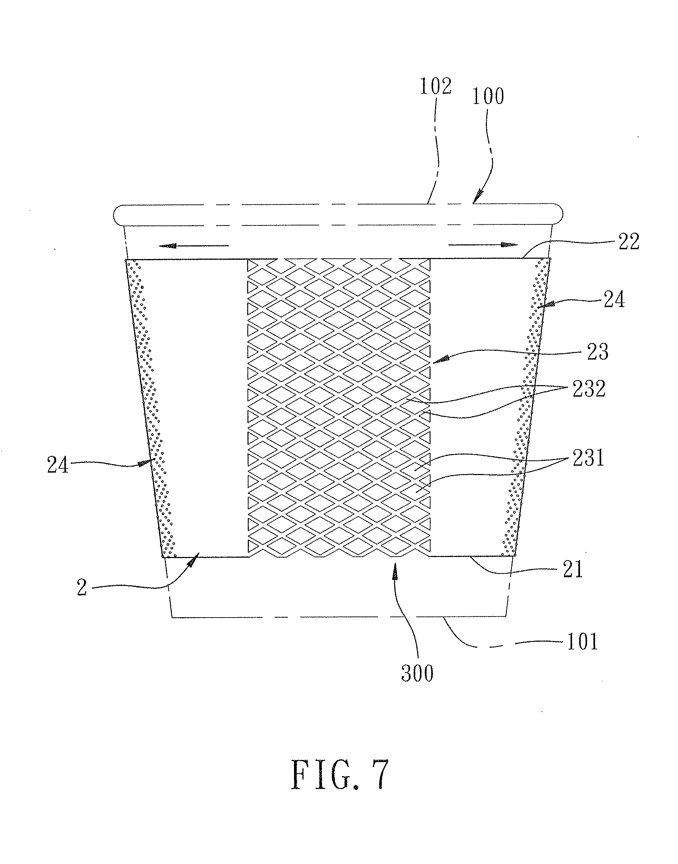

Figs. 5 and 6 illustrate the second preferred embodiment of a cup sleeve according to this invention. The second preferred embodiment differs from the first preferred embodiment in that, in the second preferred embodiment, each of the non-rough regions 23 has a pattern part 300 formed with a plurality of through holes 231. Each of the through holes 231 extends through the sleeve body 2. In detail, the pattern part 300 has a plurality of intersecting strip portions 232 to define the through holes 231, and the through holes 231 are arranged to form a generally rhombus shape. With the through holes 231 formed in the generally rhombus shape, the intersecting strip portions 232 can be stretched circumferentially such that the cup sleeve of this invention can be expanded to fit around a cup with a slightly larger size (see Fig. 7).

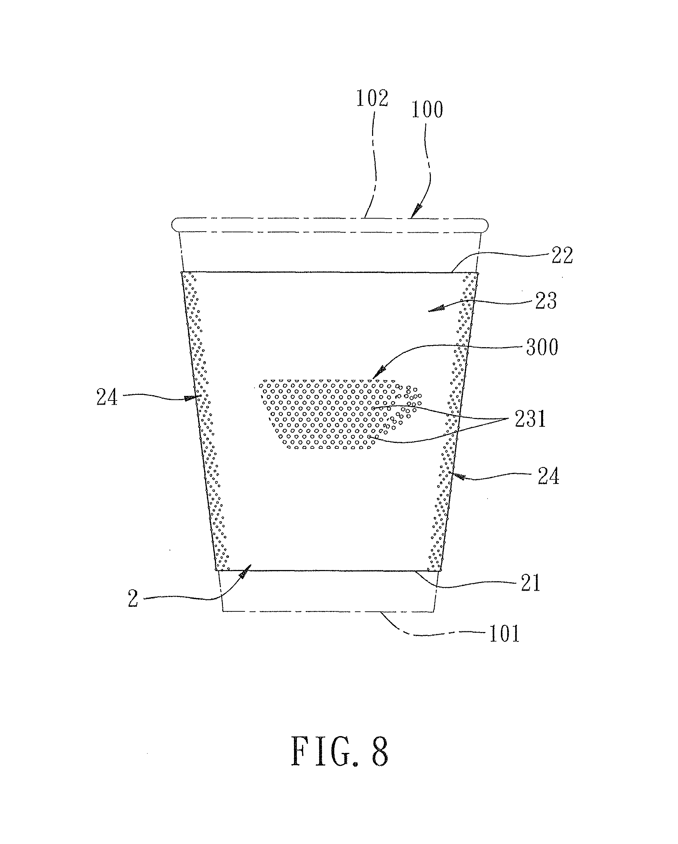

Fig. 8 illustrates the third preferred embodiment of a cup sleeve according to this invention. The third preferred embodiment differs from the second preferred embodiment in that, in the third preferred embodiment, the through holes 231 formed in the pattern part 300 of each of the non-rough regions 23 are formed into a pattern of a coffee cup. Based on an advertising requirement, the through holes 231 may be formed into other patterns, such as a trademark or an advertisement.

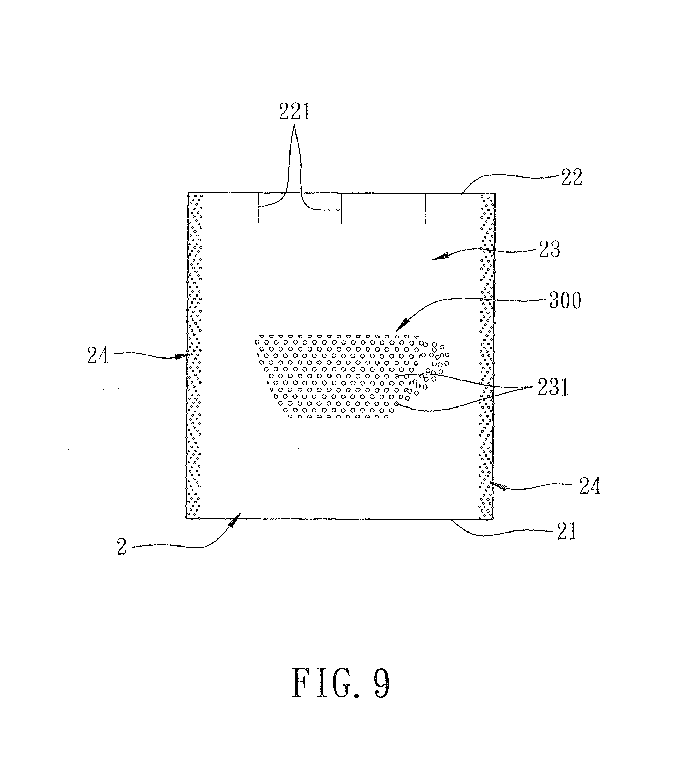

Fig. 9 illustrates the fourth preferred embodiment of a cup sleeve according to this invention. The fourth preferred embodiment differs from the third preferred embodiment in that, in the fourth preferred embodiment, the lower open end 21 has a perimeter equal to that of the upper open end 22, and the sleeve body 2 is formed with a plurality of spaced apart slits 221. Each of the slits 221 extends downwardly from the upper open end 22 such that the upper open end 22 is expandable.

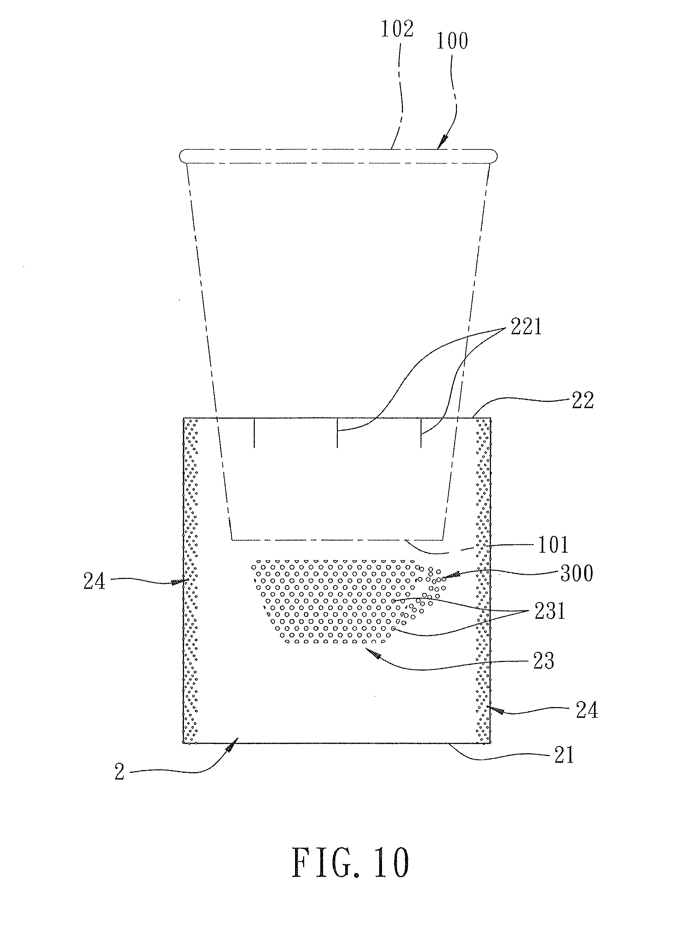

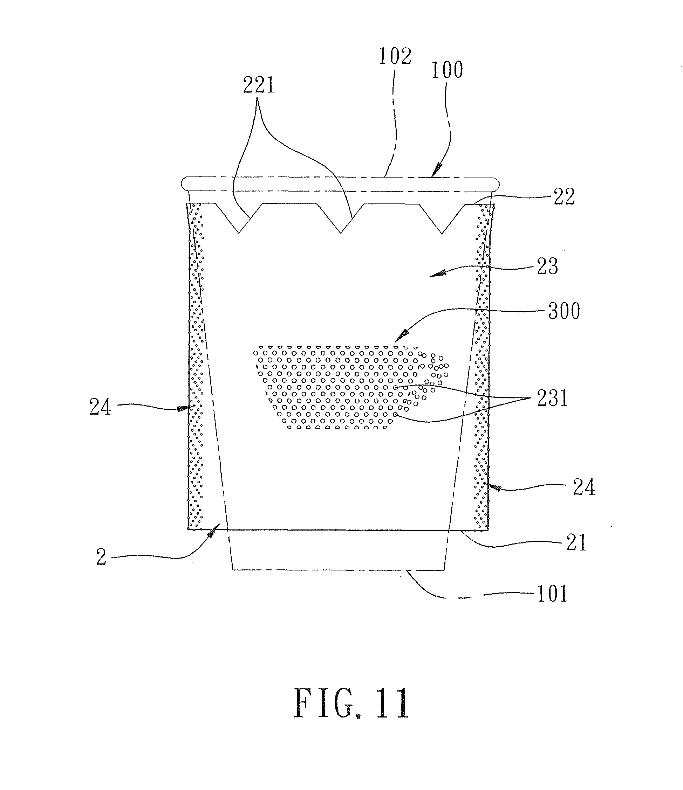

Referring to Figs. 10 and 11, when using the cup sleeve shown in Fig. 9, the lower closed end 101 of the cup 100 is inserted into the sleeve body 2 from the upper open end 22. With the progress of the insertion, although the perimeter of the upper open end 22 is smaller than that of the upper open end 102 of the cup 100, the cup sleeve of this invention can be sleeved around the cup 100. This is because the upper open end 22 of the sleeve body 2 can be circumferentially stretched to expand due to the provision of the slits 221, and because the sleeve body 2 has a thickness much smaller than that of the corrugated paper used in a conventional cup sleeve and can be easily shaped by the user's hands. Accordingly, the upper open end 22 of the sleeve body 2 can be tightly fitted with the perimeter of the upper open end 102.

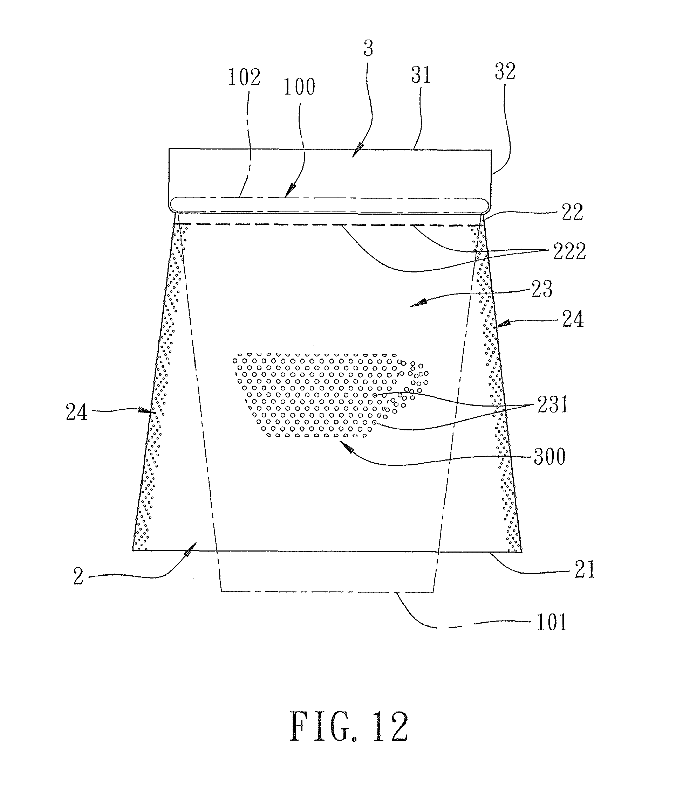

Fig. 12 illustrates the fifth preferred embodiment of a cup sleeve according to this invention. The fifth preferred embodiment differs from the third preferred embodiment in that, in the fifth preferred embodiment, the cup sleeve further comprises a cover body 3, and the lower open end 21 has a perimeter greater than that of the upper open end 22. The cover body 3 is adapted to cover the upper open end 102 of the cup 100, and has a top wall portion 31 and a surrounding wall portion 32 extending downwardly from a periphery of the top wall portion 31. The surrounding wall portion 32 has a bottom end connected to the upper open end 22 of the sleeve body 2.

In this preferred embodiment, the bottom end of the surrounding wall portion 32 surrounds and engages the upper open end 102 of the cup 100. The sleeve body 2 is formed with a perforated tearing line 222 extending annularly along the upper open end 22 of the sleeve body 2 in proximity to the cover body 3 such that the cover body 3 can be removed from the sleeve body 2. The top wall portion 31 may be formed with a drinking opening (not shown). Otherwise, if no drinking opening is formed, the user may remove the cover body 3 to drink the beverage in the cup 100.

In addition, as shown in Fig. 12, because the perimeter of the lower open end 21 of the sleeve body 2 is greater than that of the lower closed end 101 of the cup 100, the sleeve body 2 can be further shaped or folded to enhance the thermal insulation effect of the cup sleeve.

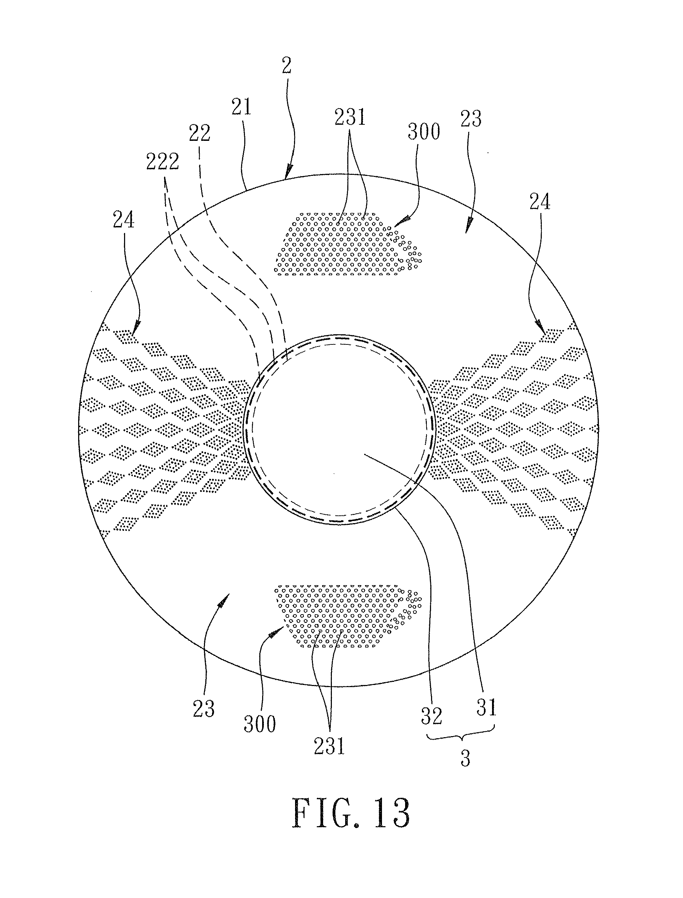

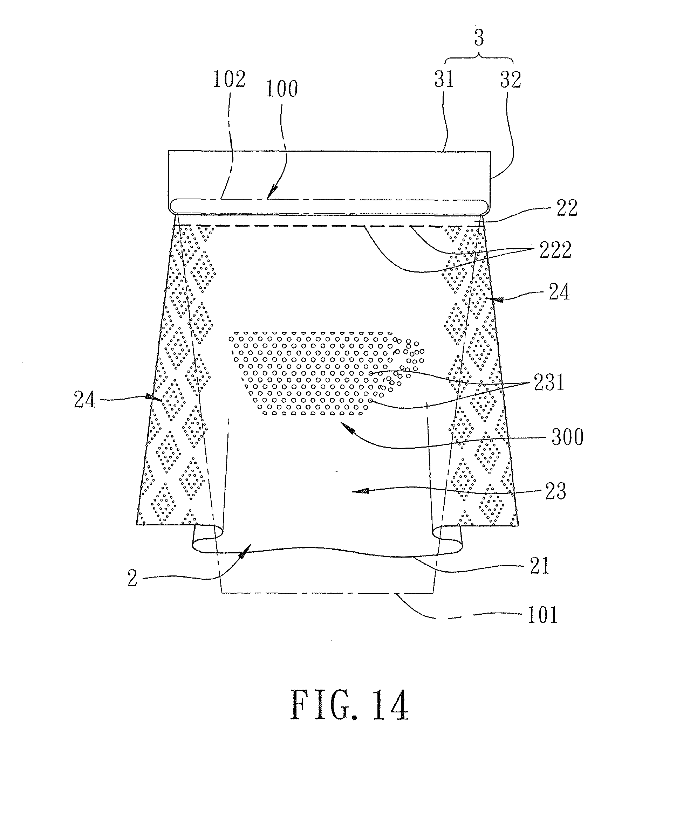

Figs. 13 and 14 illustrate the sixth preferred embodiment of a cup sleeve according to this invention. The sixth preferred embodiment differs from the fifth preferred embodiment in that, in the sixth preferred embodiment, the sleeve body 2 is in a form of a circular ring shape.

To sum up, the cup sleeve according to this invention can provide thermal insulation between a cup and a user' s hand, and the sleeve body of the cup sleeve can be easily recycled and printed with an advertisement.

## Claims

1. A cup sleeve adapted to be sleeved around a cup (100) and comprising a sleeve body (2) that is a multilayered tissue paper, said sleeve body (2) being formed with upper and lower open ends (21) and (22) that are opposite to each other, and having an outer surface that includes at least one non-rough region (23) and at least one rough region (24).

2. The cup sleeve of claim 1, wherein said rough region (24) has an embossed pattern.

3. The cup sleeve of claim 1, wherein said lower open end (21) has a perimeter smaller than that of said upper open end (22).

4. The cup sleeve of claim 1, wherein said lower open end (21) has a perimeter equal to that of said upper open end (22), and said sleeve body (2) is formed with a plurality of spaced apart slits (221) each extending downwardly from said upper open end (22) such that said upper open end (22) is expandable.

5. The cup sleeve of claim 1, further comprising a cover body (3) that is adapted to cover an open end (102) of the cup (100) and that has a top wall portion (31) and a surrounding wall portion (32) extending downwardly from a periphery of said top wall portion (31), said surrounding wall portion (32) having a bottom end connected to said upper open end (22) of said sleeve body (2).

6. The cup sleeve of claim 5, wherein said lower open end (21) has a perimeter greater than that of said upper open end (22).

7. The cup sleeve of claim 5, wherein said sleeve body (2) is formed with a perforated tearing line (222) extending annularly along said upper open end (22) in proximity to said cover body (3) such that said cover body (3) can be removed from said sleeve body (2).

8. The cup sleeve of claim 1, wherein said sleeve body (2) has a plurality of said non-rough regions (23), and a plurality of said rough regions (24) that have a number identical to a number of said non-rough regions(23), and that are disposed alternately with said non-rough regions(23).

9. The cup sleeve of claim 8, wherein at least one of said non-rough regions (23) is formed with a plurality of through holes (231) each extending through said sleeve body (2).

10. The cup sleeve of claim 9, wherein said through holes (231) are formed into a pattern (300) on said at least one of said non-rough regions (23).

11. The cup sleeve of claim 10, wherein said through holes (231) are arranged to form a generally rhombus shape.
